# EUROPÄISCHE PATENTSCHRIFT

(11) **EP 3 697 687 B1**
(45) Veröffentlichungstag und Bekanntmachung des Hinweises auf die Patenterteilung: **19.05.2021**
(21) Anmeldenummer: 18795417.7
(22) Anmeldetag: 23.10.2018
(51) Int. Cl.: B64C 39/02

(54) **SYSTEM UND VERFAHREN FÜR EINE ZUSTELLUNG VON ZEITUNGEN AN ENDKUNDEN**
SYSTEM AND METHOD FOR DELIVERING NEWSPAPER TO END CUSTOMER
SYTÈME ET PROCÉDÉ POUR LA DISTRIBUTION DE JOURNAUX AUX ABONNÉES

(30) Priorität: 26.10.2017 DE 102017125139
(43) Veröffentlichungstag der Anmeldung: 26.08.2020
(73) Patentinhaber: Heinen-Verlag GmbH, 50667 Köln (DE)
(72) Erfinder: HEINEN, Johannes, 50667 Köln (DE)
(74) Vertreter: Patentanwälte Bauer Vorberg Kayser
(86) Internationale Anmeldenummer: PCT/EP2018/078986
(87) Internationale Veröffentlichungsnummer: WO 2019/081479

(56) Entgegenhaltungen:
- WO-A1-2017/079587
- WO-A1-2017/173311

## Beschreibung

Tageszeitungen werden in der Regel nachts, in den frühen Stunden des Tags den einzelnen Endkunden zugestellt, sodass diese die Zeitung morgens beim Frühstück lesen können. Die Zustellung erfolgt insbesondere durch Zustellgesellschaften, welche zumeist von lokalen Zeitungsverlagen betrieben werden. Es werden Boten beschäftigt, die alle lokalen und überregionalen Zeitungen austragen, sodass jeder Haushalt nächtlich nur von einem Boten aufgesucht wird. Dieser stellt beispielsweise auch Wochenzeitungen zu.

Aufgrund der Verfügbarkeit von digitalen Angeboten und auch des zunehmenden Altersdurchschnitts der Endkunden haben die Tageszeitungen erheblich an Auflage verloren. Diese Entwicklung setzt sich derzeit fort. Durch die schwindende Auflagenzahl und die damit einhergehend sinkende Abdeckung wird die Zustellung pro Zeitung zunehmend teurer. Es lassen sich praktisch keine Zustellkosten einsparen, wenn ein einzelner Endkunde wegfällt. Nur im seltenen Fall, dass ein wegfallender Endkunde am Rand eines Zustellbezirks liegt, führt dies zu einem Verkürzen der Route.

Aufgrund der derzeitig guten Beschäftigungslage und auch aufgrund des Mindestlohngesetzes wird es aktuell zunehmend schwieriger, Zusteller zu finden, die die anstrengende Arbeit der Zustellung nachts und bei Wind und Wetter zuverlässig ausüben.

In ländlichen Gebieten liegen die Zustellkosten deutlich höher als in Stadtgebieten. In sehr abgelegenen Gebieten können die Zustellkosten den Verkaufspreis des Abonnements erreichen oder sogar übertreffen.

Zudem tritt hin und wieder der Fall auf, dass eine Ersatzzustellung durchgeführt werden muss, weil die normale Zustellung nicht ordnungsgemäß erfolgt ist. Hier wird die Zustellung insbesondere aufwendig.

Hiervon ausgehend ist es Aufgabe der Erfindung, die Zustellung von Zeitungen in irgendeiner Form zu automatisieren und damit insbesondere die Zustellung an einen Endkunden zu vereinfachen. Es sollen ein System und ein Verfahren angegeben werden, die das heutige System und Verfahren der Zustellung, die arbeitsintensiv sind, ersetzen kann.

Diese Aufgabe wird gelöst durch ein System für eine Zustellung von Zeitungen an Endkunden mit mindestens einer Drohne, die a) eine für autonomes Fliegen eingerichtete Flugkontrolleinheit aufweist, b) mindestens einen als Elektromotor ausgebildeten Flugmotor hat, c) einen auswechselbaren Akkumulator aufweist, der den Flugmotor mit Spannung versorgt, d) eine programmierbare Steuereinheit hat, der mindestens ein Speicher zugeordnet ist, und e) an ihrer Unterseite eine Kupplung für eine elektrische und mechanische Verbindung aufweist und mit einer Mehrzahl von Kassetten, wobei jede Kassette f) ein mit der Kupplung zusammenwirkendes Kupplungsgegenstück zur starren Verbindung einer Kassette mit einer Drohne, g) eine Anzahl von nebeneinander angeordneten, nach unten offenen Fächern für die Aufnahme von jeweils einer folierten Zeitung, h) je Fach ein mit der Steuereinheit verbundenes Haltemittel für die Zeitung, das normalerweise den Weg für die Zeitung aus dem Fach nach unten sperrt und von der Steuereinheit aus dem Sperrzustand in einen Freigabezustand bewegt wird, in welchem die Zeitung nach unten aus dem Fach herausfällt, und i) einen Datenträger aufweist, der die Kassette eindeutig identifiziert und der in Leseverbindung mit der programmierbaren Steuereinheit ist.

Sie wird weiterhin gelöst durch das Verfahren gemäß Anspruch 14.

Die Zustellung von Waren mittels Drohnen ist bekannt. So ist US 2014/032034 A1 ein System für die Auslieferung von Waren bekannt, das mehrere autonom navigierende Drohnen einsetzt. Das System hat eine Anzahl von Basisstationen, die mit den Drohnen kommunizieren und diesen Ortsinformationen übermitteln. Über einen Computer wird das System gesteuert.

Die US 2017/011340 A1 beschreibt Systeme und Methoden zum Ausliefern eines Pakets an ein Ziel unter Verwendung einer Drohne. Bei Eingang eines Auftrags wird zunächst eine Bodenstation ausgesucht, in der sich das Paket befindet. Der Drohne wird die Anweisung übermittelt, das Paket an das Ziel zu liefern. Sie erhält einen konkreten Flugplan für den Weg zum Ziel.

Die WO 2015/155087 A1 beschreibt ein Verfahren zum Überbringen einer Sendung durch eine unbemannte Transporteinrichtung in Form einer Drohne an ein Ziel. Das Ziel hat einen Aufnahmebehälter für die Sendung. Wenn sich die Drohne im Areal um das Ziel befindet, tauscht sie Informationen mit dem Aufnahmebehälter aus. Hierzu gehören Informationen über die Berechtigung, die Sendung im Aufnahmebehälter zu deponieren, und zudem Ortungssignale, damit die Drohne im Nahbereich genau das Ziel auffinden kann.

Aus der WO 2017/079587 A1 ist es bekannt, ein Straßenfahrzeug in eine Auslieferungszone zu fahren. An Bord des Straßenfahrzeugs sind mehrere Drohnen und zudem Waren, die an Endkunden ausgeliefert werden sollen. Wenn sich das Straßenfahrzeug in der Auslieferungszone befindet, werden Drohnen gestartet, sie werden mit jeweils einer Ware beladen und fliegen zum Endkunden, wo die Ware abgelegt wird. Danach fliegen die Drohnen wieder zum Straßenfahrzeug zurück.

Aus der WO 2017/083282 A1 ist ein Liefersystem für Produkte bekannt, bei dem eine Drohne ein auszulieferndes Produkt an ein Fahrzeug eines Endkunden übergibt, das sich in einem speziellen Wartebereich befindet. Dort sind Kameras installiert, die das wartende Fahrzeug und die Drohne erfassen. Mittels Bildverarbeitung wird die genaue Abgabeposition des Produktes ermittelt
Ein weiteres Liefersystem mittels Drohnen ist aus der WO 2017/173311 A1 bekannt.

Unter einer Drohne wird ein unbemanntes Luftfahrzeug verstanden, das eigenständig operiert, insbesondere autonom navigiert. Vorzugsweise besteht zusätzlich die Möglichkeit, es fernzusteuern. Es ist über Funkverbindung mit Netzwerken wie beispielsweise Internet, GPS usw. in Verbindung und tauscht Daten mit diesen Netzwerken aus. Die Drohne ist in der Regel einem Hubschrauber ähnlich aufgebaut, beispielsweise als Quadrocopter ausgebildet, sie kann aber auch als Luftschiff ausgeführt sein. Sie hat einen motorischen Vortrieb, sie wird durch einen Elektromotor angetrieben.

Das erfindungsgemäße System verwendet Drohnen für die Zustellung. Es verwendet weiterhin Kassetten, die für die Aufnahme mehrerer Zeitungen eingerichtet sind. Vorzugsweise sind die Kassetten baugleich. Sie haben eine Vielzahl von Fächern, pro Zeitung ist ein Fach vorgesehen. Die Kassetten haben mindestens 3 Fächer, vorzugsweise mindestens 8 Fächer und beispielsweise 30 bis 40 Fächer. Die Fächer sind nach unten offen, vorzugsweise sind sie nur nach unten offen. Sie können daher von unten befüllt werden. Jedes Fach hat ein Haltemittel, das sich in Nähe der Öffnung des Fachs befindet und normalerweise im Sperrzustand ist. In diesem Sperrzustand ist der Weg einer Zeitung aus dem Fach nach unten gesperrt. Die Zeitung liegt auf dem Haltemittel. Das Haltemittel ist mit der Steuereinheit verbunden und kann in einen Freigabezustand bewegt werden. In diesem ist der Weg für die Zeitung nach unten frei. Die Zeitung fällt dann aus dem Fach heraus.

Die Zeitung ist foliert. Die Folierung schützt die Zeitung, nachdem sie aus dem Fach heraus auf einen Aufnahmeplatz des Endkunden gefallen ist, beispielsweise einen Eingangsweg eines Hauses, einen Balkon oder einen speziellen Auffangbehälter. Für die Folierung wird eine dünne Kunststofffolie, beispielsweise PP oder PE verwendet. Die Folie umschließt die Zeitung und ist vorzugsweise durch Schweißen verschlossen. Die Folie und das Material der Wände des Faches haben jeweils eine Haftreibung und eine Gleitreibung nicht schlechter als trockenes Zeitungspapier gegenüber trockenem Zeitungspapier, sodass die Zeitung im Freigabezustand stets ohne fremde Hilfe aus dem Fach herausfällt, sobald das Haltemittel in den Freigabezustand bewegt wird.

Die Fächer sind vorzugsweise parallel und nebeneinander angeordnet, vorzugsweise gleichabständig. Vorzugsweise sind zumindest einige Fächer baugleich. Vorzugsweise ist die Kassette ein quaderförmiger Körper. Er ist durch eine Anzahl von Zwischenwänden in einzelne Fächer aufgeteilt. Die Zwischenwände sind möglichst dünn, vorzugsweise unter 1mm Wandstärke. An der Unterseite der Kassette definieren die Wände der Kassette und die Zwischenwände rechteckförmige Öffnungen. Oberhalb dieser Öffnungen können die Zwischenwände auch durch Stäbe, durch Netze oder dergleichen gebildet sein. Im Bereich der Öffnung befindet sich das Haltemittel.

Die Kassetten können entweder starrer Körper sein oder nicht, sie können z.B. ein starres Oberteil und ein starres Unterteil aufweisen, die ausschließlich durch textiles Material, insbesondere durch als textile Taschen ausgebildete Fächer miteinander verbunden sind. Letztere Ausbildung hat den Vorteil, dass eine leere Kassette flach zusammengelegt werden kann und dann weniger als ein Drittel des Volumens der normalen Kassette hat.

Die Kassetten werden nach der Herstellung oder Anlieferung der einzelnen Zeitungen in einem Zentrum mit den Zeitungen befüllt. Als Zentrum wird vorzugsweise die Druckerei einer Tageszeitung gewählt. Die Haltemittel befinden sich dann vorzugsweise noch im Freigabezustand oder werden in diesen gebracht. Die Zeitungen werden in die einzelnen Fächer eingelegt, die Haltemittel werden geschlossen. In diesem Zustand sind die Kassetten transportfähig. Der Datenträger jeder einzelnen Kassette wird beschrieben oder ist bereits beschrieben mit Daten der Endkunden. Der Datenträger enthält Daten für jedes einzelne Fach der betreffenden Kassette. In einer Alternative ist der Datenträger lediglich durch eine unterscheidende Angabe, sogenannte ID, realisiert und weist keine Daten der Endkunden auf. Die unterscheidende Angabe ist vorzugsweise durch einen Menschen lesbar und erkennbar.

Die Befüllung der Kassetten erfolgt in der Regel manuell. Bei höheren Volumina erfolgt sie in einer speziell dafür ausgelegten Vorrichtung, die weitgehend automatisch arbeitet.

Die Kassetten mindestens eines Auslieferungsbereichs werden nun in den Auslieferungsbereich transportiert. Das gesamte Gebiet, für das die Zustellung erfolgt, ist in Auslieferungsbereiche unterteilt. Ein Auslieferungsbereich umfasst zum Beispiel das Gebiet eines kleinen Dorfes, einiger Straßen in einer Stadt usw. In den einzelnen Auslieferungsbereichen können die Kassetten jeweils an einer Ablagestelle deponiert und später von einem Mitarbeiter, der ein Fahrzeug hat, aufgenommen werden. Die Auslieferungsbereiche werden vorzugsweise so ausgewählt, dass in einem Startpunkt des Auslieferungsbereichs eine optimale Flugroute zu den einzelnen Endkunden des betreffenden Auslieferungsbereichs möglich ist und die Endkunden von dem Startpunkt nur so weit entfernt sind, dass mindestens einige Endkunden, vorzugsweise mindestens 3, mit einer Drohne erreicht werden können.

Es ist vorteilhaft, wenn ein einzelnes Fahrzeug, das mindestens eine Drohne an Bord hat, nacheinander mehrere Ablagestellen anfährt und anschließend zu den einzelnen Startpunkten fährt, von wo aus die Flüge beginnen. Es ist möglich, dass ein Startpunkt mit einer Ablagestelle zusammenfällt. Alternativ werden die Kassetten nicht zuvor an Ablagestellen deponiert, sondern vom Zentrum mit dem Fahrzeug direkt zu einem oder mehreren Auslieferungsbereichen gefahren.

Das Fahrzeug hat weiterhin mindestens einen zusätzlichen Akkumulator für die Drohne an Bord. Die Fahrzeuge haben vorzugsweise mehrere Drohnen, beispielsweise mindestens 8, vorzugsweise mindestens 12 Drohnen an Bord. Sie transportieren auch eine höhere Anzahl von Akkumulatoren, die gefüllt sind und gegen entleerte ausgetauscht werden. Es ist möglich, die Akkumulatoren an Bord des Fahrzeuges zu laden.

Die Drohne ist für den Transport (nur) einer Kassette, die mit Zeitungen gefüllt ist, eingerichtet. Die Drohne hat an ihrer Unterseite die Kupplung für die elektrische und mechanische Verbindung mit der Kassette. Die Kassette hat das entsprechende Kupplungsgegenstück. Sie kann an der Unterseite der Drohne starr befestigt werden. Unter einer starren Befestigung wird hierbei verstanden, dass die Kassette fest an der Drohne gehalten und gegenüber der Drohne ausgerichtet ist. Die Kassette soll sich während des Fluges nicht relativ zur Drohne bewegen können. Die Kassette soll sich allenfalls im Rahmen geringfügiger elastischer Bewegungen gegenüber der Drohne bewegen können. Insoweit können in der Kupplung oder Kupplungsgegenstück elastische Mittel, zum Beispiel Federn, vorgesehen sein, die eine gewisse Relativbewegung der Kassette gegenüber der Drohne um bis zu 3 % zu lassen.

Über die elektrische Verbindung ist die Steuereinheit der Drohne mit dem Datenträger der Kassette verbunden, der ein elektronischer Datenträger und/oder ein optischer Datenträger sein kann. Dadurch erhält die Steuereinheit die Daten der Endkunden der zugehörigen Kassette, insbesondere geographische Daten. Sie erhält zumindest eine Information über die konkrete Kassette, zum Beispiel die Nummer der Kassette. Die Steuereinheit steuert damit und gegebenenfalls mit weiteren Informationen die Flugkontrolleinheit, die dafür zuständig ist, dass die Drohne nacheinander die Endkunden anfliegt, dort die für den einzelnen Endkunden bestimmte Zeitung aus dem zugehörigen Fach freigibt, und dann zum nächsten Endkunden fliegt, letztlich zum Fahrzeug zurückfliegt.

Vorzugsweise sind die Daten der Endkunden in einem zentralen Speicher, auf den das Zentrum Zugriff hat, gespeichert. Die Speicherung kann zum Beispiel in einer Cloud erfolgen. Vorzugsweise ist die Drohne in Funkverbindung mit einer Rechenzentrale, die den zentralen Speicher verwaltet. Kurzfristige Änderungen bei einem Endkunden können so der Drohne noch während des Fluges übermittelt werden.

Vorzugsweise hat die Drohne einen Flugweg, der insgesamt möglichst kurz ist, aber alle Endkunden erreicht. Dabei ist es vorteilhaft, die Endkunden mit den kürzesten Abständen zuerst anzufliegen, damit das Gesamtgewicht der Drohne rasch kleiner wird. Dadurch wird die Flugzeit insgesamt erhöht. Es ist ebenfalls vorteilhaft, relativ schwere Zeitungen, beispielsweise Wochenzeitungen oder Sonntagszeitungen, zunächst auszuliefern, um so rasch das Gesamtgewicht der Drohne verringern zu können. Über einen Rechner werden die Gewichte der einzelnen Zeitungen in den Fächern und die geographischen Daten der Endkunden so abgeglichen, dass ein Optimum zwischen kurzem Weg und rascher Gewichtserniedrigung erreicht wird. Die so erhaltene Information ist im Datenträger abgespeichert.

Am Fahrzeug kann der Akkumulator ausgetauscht werden. Die leere Kassette wird gegen eine andere, gefüllte Kassette ausgetauscht und die Drohne startet zu einem neuen Flug. Die Flugdauer der einzelnen Flüge liegt etwa bei 20 Minuten.

Die Drohnen landen automatisch. Danach erfolgt das Entnehmen der Kassette und Anbringen einer neuen Kassette per Hand. Wenn die Zeitungen aller im Fahrzeug befindlichen Kassetten ausgeliefert sind, fährt das Fahrzeug zu einer anderen Ablagestelle und/oder kehrt abschließend mit den leeren Kassetten wieder zum Zentrum zurück.

Durch die Drohnen wird die Zustellung unabhängiger von Personalausfall, -suche, und -kosten. Die Drohnenlieferung kann auch für Nachlieferungen einzelner Zeitungen und/oder für Zustellung von Zeitschriften eingesetzt werden. Sie eignet sich insbesondere für dünner besiedelte Gebiete. Dort haben die Haushalte in der Regel bessere Abwurfmöglichkeiten und sind die Zustellkosten besonders hoch.

Die Flugdauer der Drohnen hängt maßgeblich von der Kapazität des Akkumulators, dem gewählten Flugweg und dem Gewicht der Kassette ab. Auf dem Markt gibt es derzeit Drohnen, die bis zu 9 kg Zuladung tragen können und bis zu 40 Minuten Flugdauer ohne Zuladung erreichen. Ein sinnvoller Arbeitspunkt liegt bei etwa 6 kg Zuladung, je nach Titel und Erscheinungstag kann dann eine Kassette mit 20 bis 35 Zeitungen transportiert werden. Bei Zustellung im ländlichen Gebiet wird die Drohne im Vergleich zur Bodenzustellung direkte Verbindungen zwischen den Endkunden fliegen können. Die Geschwindigkeit der Drohne liegt bei bis zu 50 km/h. Insgesamt ist die Drohne daher schneller als ein Mensch. In etwa 20 Minuten Flugzeit kann eine Zustellungsrunde durchgeführt werden, für die ein Mensch in der Regel 30 bis 60 Minuten benötigt.

Drohnen sind weitestgehend wasserdicht gefertigt und sind auch größeren Regenmengen gegenüber unempfindlich. Entsprechend wird auch die Kassette ausgelegt. Sie ist nur unten offen, alles darüber ist wasserdicht ausgeführt. Moderne Flugkontrolleinheiten können Positionen auch bei Windgeschwindigkeiten von bis zu 65 km/h präzise halten. Die Drohnen sind weitgehend temperaturunempfindlich.

Für den Abwurf beim Endkunden sollten für dessen Zustelladresse möglichst mehrere Abwurforte definiert werden. Hier kommen Einfahrten, Vorgärten, Gärten, Terrassen oder Balkone in Betracht. Die Abwurforte werden in einer für die Navigation benutzten, abgespeicherten Karte einmalig und initial definiert, sie sind dem Endkunden zugeordnet. Sie sind vorzugsweise im Datenträger abgespeichert. Die Kameras vorzugsweise eine IR-Kamera.

Um Abwurfsicherheit zu garantieren, kann ein Vergleichsfoto z.B. im Datenträger hinterlegt sein, mit dem die mit einer Kamera ausgerüstete Drohne den Ablageplatz finden und prüfen kann, ob der Ablageplatz unversperrt ist. Der Abwurf kann aus einer Höhe von 1 bis 4 Metern erfolgen. 3-4 Meter können aus Sicherheitsgründen an frei zugänglichen Orten sinnvoll sein. Vor dem Abwurf gibt die Steuereinheit der Drohne ein Signal an ein für den Endkunden bestimmtes Fach der Kassette, das Haltemittel dieses Fach geht dadurch in den Freigabezustand, die Zeitung fällt heraus. Es ist möglich, mit der Kamera der Drohne ein Bild der auf dem Ablageplatz befindlichen Zeitung aufzunehmen.

Die Flugkontrolleinheit hat einen Autopiloten, der autonome Flugfähigkeiten beinhaltet, um Verbindungen zwischen definierten Wegpunkten auch bei unerwarteten Hindernissen bewältigen zu können. Auf der Basis einer 3D Karte, die ständig aktualisiert wird, werden optimale und hindernisfreie Flugrouten errechnet. Über eine Mobilfunkverbindung kann die Flugkontrolleinheit jeweils mit aktuellen Daten versorgt werden.

Mittels GPS und/oder anderer Satelliten-Navigationsmittel wie z.B. GLONAS, kann die Drohne mit einer Abweichung von maximal 0,5 m navigieren und entsprechend große Ablageplätze sicher ansteuern. Wenn diese Genauigkeit nicht ausreicht und auch die Orientierung mittels der aktuellen Aufnahmen Kamera und Vergleich mit abgespeicherten Fotos nicht ausreicht, können zusätzliche Ortungsverfahren verwendet werden, beispielsweise RTK. Hierbei werden zusätzliche Referenzpunkte am Boden benutzt und eine Ortung auf wenige Zentimeter erreicht.

Je nach Reifegrad der autonomen Flugfähigkeiten und möglichen Regularien sowie aktuellen Beschränkungen kann es notwendig sein, an zentraler Stelle einen Drohnenpiloten zu positionieren, der manuell eingreifen kann und über Fernsteuerung die Drohne steuert, bis der Autopilot wieder übernehmen kann.

Vorzugsweise hat die Kassette mindestens einen Sensor für das Erfassen, ob ein Fach leer ist oder nicht. Dieser Sensor kann als optischer Sensor ausgebildet sein, wobei insbesondere jedes Fach einen derartigen Sensor aufweist. Der mindestens eine Sensor ist elektrisch mit der Steuereinheit verbunden. Er ist zum Beispiel als Lichtschranke ausgebildet, die im Fach befindliche Zeitung unterbricht die Lichtschranke. Der Sensor kann auch als ein Gewichtssensor der Kassette ausgebildet sein. Ist beispielsweise ein piezoelektrischer Sensor, der zwischen dem Kupplungsgegenstück und der eigentlichen Kassette angeordnet ist und das Gesamtgewicht der Kassette erfasst. Wenn eine einzelne Zeitung ausgeliefert wird, verringert sich das Gesamtgewicht um das Gewicht dieser Zeitung, dies erfasst der Sensor. Alternativ kann der Gewichtssensor auch an der Drohne angeordnet sein, zum Beispiel zwischen der Kupplung und der eigentlichen Drohne.

Falls nach Öffnen des Haltemittels es über den Sensor festgestellt wird, dass die Zeitung sich noch im Fach befindet, wird vorzugsweise durch die Steuereinheit ein Alarmsignal ausgegeben. Es kann dazu genutzt werden, die Drohne zu einem Flugmanöver zu veranlassen, das dazu führt, eine verklemmte Zeitung freizubekommen, oder die Steuereinheit zu veranlassen, das Haltemittel in den Freigabezustand zu bewegen, eventuell unter Anlage einer höheren Spannung an den Aktuator.

Als sehr vorteilhaft hat es sich herausgestellt, dass das System mindestens einen Transportbehälter aufweist. Ein Transportbehälter kann mehrere Kassetten aufnehmen, vorzugsweise nimmt er eine Kassette auf. Durch den Transportbehälter wird die Kassette mechanisch geschützt, sie kann deshalb besonders leichtgewichtig ausgebildet sein. Eine Kassette kann sich sogar beim Befüllen, das im Zentrum erfolgt, im Transportbehälter befinden. Der Transportbehälter ist vorzugsweise so ausgebildet, dass die Öffnungen der Fächer der Kassette nach oben zeigen. Der Transportbehälter hat vorzugsweise einen Deckel, der abnehmbar oder Klappbar ist, dadurch kann er vollständig geschlossen werden. Beim Öffnen des Deckels sind alle Fächer zugänglich und können zum Beispiel befüllt werden. Vorzugsweise wird mindestens eine Kassette nur dann aus dem Transportbehälter entnommen, wenn sie mit der Drohne verbunden wird und wieder in den Transportbehälter zurückgegeben, wenn die Drohne nach Auslieferung zurückgekehrt ist. Die Kassette bleibt also im Transportbehälter, solange sie nicht an die Drohne angekuppelt ist. Der Transportbehälter hat vorzugsweise einen transparenten Bereich, durch den der Datenträger der Kassette sichtbar ist. Dadurch müssen die Transportbehälter nicht mit speziellen Informationen über den Auslieferungsbereich versehen werden, sondern sind diese Informationen nur an der Kassette notwendig. Es handelt sich dabei vorzugsweise um denjenigen Teil des Datenträgers, der von Menschen direkt lesbar ist.

Vorzugsweise befindet sich das Haltemittel eines Fachs im Freigabezustand außerhalb der Öffnung. Dadurch ist sichergestellt, dass das Haltemittel außerhalb des Wegs der nach unten fallenden Zeitung ist. Vorzugsweise befindet sich im Sperrzustand des Haltemittels nur eine Klappe des Haltemittels unterhalb der Öffnung des betreffenden Fachs der Kassette. Im Sperrzustand des Haltemittels ist es diese Klappe, die verhindert, dass die Zeitung nach unten aus dem Fach herausfällt. Auf der Klappe lastet das Gewicht der Zeitung. Im Sperrzustand ist die Klappe durch einen Aktuator gehalten. Wenn dieser betätigt wird, schwenkt die Klappe aus der Öffnung heraus. Der Aktuator ist elektrisch betätigbar. Er ist zum Beispiel ein Elektromagnet mit zwischen zwei Positionen bewegbarem Kern. Vorzugsweise ist der Aktuator bistabil, sodass es jeweils nur einer Stromzufuhr bedarf, um ihn von einer Endposition in die andere zu bewegen, er aber normalerweise keine elektrische Leistung benötigt. Der Aktuator kann auch ein Elektromotor sein, der zwischen zwei Endpositionen bewegt wird. Es ist vorteilhaft, der Klappe eine Feder zuzuordnen, die sie in eine ihrer beiden Endpositionen elastisch vorbelastet, vorzugsweise in den Freigabezustand.

Begriffe wie im Wesentlichen, vorzugsweise und dergleichen sowie möglicherweise als ungenau zu verstehende Angaben sind so zu verstehen, dass eine Abweichung um plusminus 5 %, vorzugsweise plusminus 2 % und insbesondere plus minus ein Prozent vom Normalwert möglich ist. Die Anmelderin behält sich vor, beliebige Merkmale und auch Untermerkmale aus den Ansprüchen und/oder beliebige Merkmale und auch Teilmerkmale aus der Beschreibung in beliebiger Art miteinander zu kombinieren, dies auch außerhalb der Merkmale unabhängiger Ansprüche und der Rückbeziehung einzelner Ansprüche.

Weitere Vorteile und Merkmale der Erfindung ergeben sich aus den übrigen Ansprüchen sowie aus der nun nachfolgenden Beschreibung von zwei Ausführungsbeispielen der Erfindung mit denen die Erfindung unter Bezugnahme auf die Zeichnung näher erläutert wird. Diese Ausführungsbeispiele sind nicht einschränkend zu verstehen. In der Zeichnung zeigen
- Figur 1: eine prinzipielle Darstellung einer Drohne mit darunter befindlicher, noch nicht vollständig angekuppelter Kassette,
- Figur 2: eine prinzipielle Darstellung einer Sicht auf eine Unterseite einer Kassette, die sich in einem Transportbehälter befindet, dessen Deckel geöffnet ist,
- Figur 3: eine schnittbildliche Ansicht entlang der Schnittlinie III-III in Figur 2,
- Figur 4: eine Ansicht entsprechend des Pfeils IV in Figur 2, jedoch bei geöffneter Klappe,
- Figur 5: eine Draufsicht auf die Oberseite einer Kassette in prinzipieller Darstellung und
- Figur 6: eine Seitenansicht eines Fahrzeugs für die Auslieferung von Zeitungen mittels einer Drohne,
- Figur 7: eine Darstellung ähnlich Figur 1 für ein zweites Ausführungsbeispiel,
- Figur 8: eine perspektivische Darstellung einer Kassette des zweiten Ausführungsbeispiels mit Sicht von schräg unten,
- Figur 9: eine perspektivische Darstellung der Kassette gemäß Figur 8 mit Sicht von schräg oben,
- Figur 10: eine vergrößerte Detailansicht auf die vordere Ecke der Kassette in Figur 9, und
- Figur 11: eine perspektivische Darstellung der Kassette nach Figur 8 mit Blick von unten.

In den unterschiedlichen Figuren sind hinsichtlich ihrer Funktion gleichwertige Teile stets mit denselben Bezugszeichen versehen, sodass diese in der Regel auch nur einmal beschrieben werden.

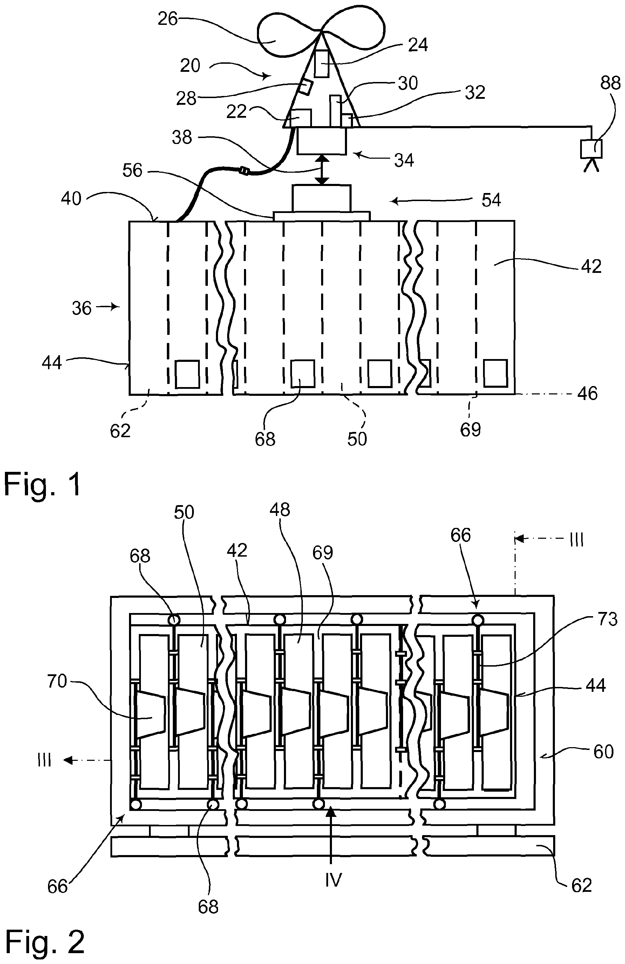

In Figur 1 ist die Drohne 20 lediglich prinzipiell dargestellt, es wird eine handelsübliche Drohne eingesetzt. Sie hat eine Flugkontrolleinheit 22, die für autonomes Fliegen ausgelegt und eingerichtet ist. Sie wird dabei unterstützt von einer geeigneten Auswahl von Modulen wie GPS, 3D-Landkarten, Kameras für das optische Navigieren, Radar, Ultraschallsender und -empfänger usw., die Stand der Technik sind und von denen jeweils geeignete Module ausgewählt werden.

Die Drohne 20 hat einen Elektromotor 24, der einen Rotor 26 antreibt. Der Elektromotor 24 und auch die sonstige Elektronik, insbesondere die Flugkontrolleinheit 22, werden von einem Akkumulator 28 mit Spannung versorgt. Dieser ist rasch austauschbar in einer Aufnahme der Drohne 20 untergebracht.

Die Drohne 20 hat weiterhin eine programmierbare Steuereinheit 30, der ein Speicher 32 zugeordnet ist. Steuereinheit 30 und Speicher 32 sind im Wesentlichen für die Aufnahme individueller Daten bestimmt, die konkret für die Zustellung von Zeitungen an Endkunden notwendig und vorgesehen sind.

Schließlich hat die Drohne 20 eine Kupplung 34 für eine elektrische und mechanische Verbindung mit einer Kassette 36, die unterhalb der Drohne 20 dargestellt ist. Ein Doppelpfeil 32 zeigt an wie beide verbunden werden.

Die Kassette 36 ist im wesentlichen quaderförmig, sie hat eine Oberseite 40, gegenüberliegende Seitenflächen 42 und ebenfalls gegenüberliegende Stirnflächen 44 sowie eine Unterseite. Nur auf ihrer Unterseite ist die Kassette offen, dort befinden sich in einer Ebene 46 eine Vielzahl von Öffnungen 48 nebeneinander und parallel zueinander ausgerichtet. Diese Öffnungen 48 gehören zu Fächern 50. Diese Fächer 50 sind so ausgelegt, dass sie jeweils eine Zeitung 52 aufnehmen. Die Zeitung 52 befindet sich in einer Folienhülle, sie ist also foliert.

Die Kassette 36 ist so leichtgewichtig wie möglich ausgeführt. Sie ist beispielsweise aus Doppelstegplatten, Aluminiumplatten oder dergleichen gefertigt.

Auf der Oberseite 40 befindet sich ein mit der Kupplung 34 zusammenwirkendes Kupplungsgegenstück 54. In der hier gezeigten Ausführung ist die Verbindung separat aufgeteilt in eine mechanische Kupplung und eine elektrische Kupplung. Die mechanische Kupplung dient dazu, die Kassette 36 stabil und möglichst gering beweglich mit der Drohne 20 zu verbinden. Über den elektrischen Teil der Kupplungsverbindung wird die Verbindung mit elektrischen Bauteilen der Kassette 36 hergestellt, auf diese Bauteile wird im Folgenden noch eingegangen.

Das Kupplungsgegenstück 54 ist über einen Sensor 56 mit der Oberseite 40 verbunden. Dieser ist als piezoelektrischer Sensor 56 ausgeführt. Über ihn kann das aktuelle Gesamtgewicht der Kassette 36 abgefragt werden.

Weiterhin befindet sich auf der Oberseite 40 ein Datenträger 58. Dieser ist aufgeteilt in einen maschinenlesbaren und einen von Menschen lesbaren Teil. Beide enthalten Informationen über diejenigen Endkunden, deren Zeitungen 52 sich in der Kassette 36 befinden, also beispielsweise über einen Auslieferungsbereich, in dem sich ein Startplatz für die Drohne 20 befindet. Im Ausführungsbeispiel ist die Angabe MAIN 3 erkennbar, dies soll heißen, dass es sich um die dritte Kassette für das Auslieferungsgebiet Mainstraße handelt. Es ist möglich, den von Menschen lesbaren Teil auch an einer anderen Fläche der Kassette 36 anzuordnen, beispielsweise an einer Stirnfläche 44. Dies kann zusätzlich oder alternativ zur Oberseite 40 sein. Auch der maschinenlesbare Teil kann beliebig an der Kassette 36 angeordnet sein, er muss nicht an der Oberseite 40 befestigt sein. Der maschinenlesbare Teil ist über die elektrische Kupplung mit der Steuereinheit 30 verbunden.

Figur 2 zeigt eine Sicht auf die Unterseite der Kassette 36. Diese befindet sich in einem Transportbehälter 60, er hat einen Deckel 62, der aufgeklappt ist. Der Transportbehälter 60 nimmt die Kassette 36 auf und schützt sie mechanisch. Dadurch kann sie so leichtgewichtig wie möglich ausgeführt werden.

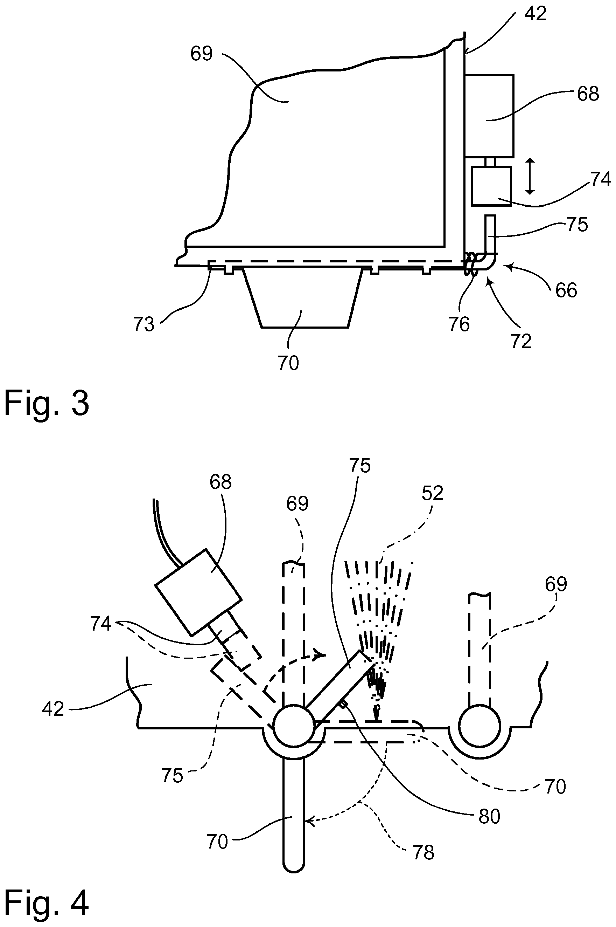

Wie aus den Figuren 1 bis 4 ersichtlich ist, hat die Kassette 36 eine Vielzahl von Fächern 50. Jedes einzelne Fach ist für die Aufnahme einer Zeitung 52 (siehe Figur 4) ausgelegt. Jedes Fach 50 ist nur nach unten offen. Die Zeitung 52 wird durch ein Haltemittel 66 gegen Herausfallen aus dem Fach 50 gesichert. Jedes Fach 50 hat ein eigenes Haltemittel 66. Das Haltemittel 66 hat einen Aktuator 68, der von der Steuereinheit 30 betätigt wird. Diese greift hierzu auf im Speicher 32 vorliegende Daten zurück, die unter anderem auch aus dem Datenträger 58 stammen.

Das Haltemittel 66 weist im Ausführungsbeispiel eine Klappe 70 auf, die im Sperrzustand des Haltemittels 66 quer über der Öffnung 48 und damit etwa in der Ebene 46 liegt. Im Freigabezustand des Haltemittel 66 ist die Klappe 70 um etwa 90° geschwenkt, sie befindet sich nun außerhalb der Öffnung 48 und steht gegenüber der Unterseite der Kassette 36 nach unten vor. Die Klappe 70 ist mit einer L-förmigen Schwenkachse 72 mechanisch verbunden. Ein langer Schenkel 73 der Schwenkachse 72 ist auf der Unterseite einer Wand 69, welche zwei benachbarte Fächer 50 trennt, drehbar gelagert. Hierzu sind Lagerböcke vorgesehen. Der lange Schenkel 73 verläuft parallel zu der Ebene 46. Ein kurzer Schenkel 75 der Schwenkachse 72 verläuft parallel zu einer Seitenfläche 42, siehe Figuren 3 und 4. Im Schwenkbereich eines freien Endbereichs dieses kurzen Schenkels 75 befindet sich wahlweise ein Kern 74 des Aktuators 68 oder nicht. Befindet sich der Kern 74 in seiner oberen Position, siehe Figur 3 und ausgezogene Striche in Figur 4, ist das Haltemittel 66 im Freigabezustand und behindert der Kern 74 nicht die Bewegung des freien Endes. In der unteren Position, siehe Figur 3, unterbrochene Striche, liegt das freie Ende am Kern 74 an. Das freie Ende wird in dieser Position durch das Gewicht der Zeitung 52 und zudem durch eine Feder 76 in Anlage am Kern 74 gehalten. Ausgehend von der Darstellung mit gestrichelten Linien in Figur 4 schwenkt die Schwenkachse 72 im Sinne der Pfeile 78 in die mit ausgezogenen Strichen dargestellte Position, sobald der Aktuator 68 betätigt wird. Dabei gibt die Klappe 70 den Weg der Zeitung 52 nach unten frei, die Zeitung 52 fällt heraus.

Figur 3 zeigt einen Kern 74, der ein relativ großes Flächenelement aufweist. Es hat eine quer zur Bewegungsrichtung, siehe Doppelpfeil, gemessene Breite, die mindestens dreimal, vorzugsweise mindestens fünfmal so groß ist wie die entsprechende Breite des kurzen Schenkels 75. Dadurch wird auch bei Ungenauigkeiten erreicht, dass im Sperrzustand der kurze Schenkel 75 mechanisch gehalten wird.

Im Freigabezustand liegt der kurze Schenkel 75 an einem Anschlag 80 an. Dadurch wird verhindert, dass die betrachtete Klappe 70 über 90° hinaus schwenken und über eine benachbarte Öffnung gelangen kann und eventuell das Öffnen der dortigen Klappe 70 dort behindern kann. Der Anschlag 80 ist so positioniert, dass die Klappe 70 außerhalb des Weges der Zeitung 52 des benachbarten Fachs ist.

Im Freigabezustand befindet sich das Haltemittel 66 vollständig außerhalb der Öffnung 48 und des Weges der Zeitung 52 nach unten, es kann also das Herausfallen der Zeitung nicht behindern. Im Sperrzustand ist nur die Klappe 70 im Wege.

Die Kassette 36 kann in dem in Figur 2 gezeigten Zustand mit frischen Zeitungen 52 befüllt werden. Die einzelnen Haltemittel 66 jedes Fach 50 sind im Sperrzustand. Wenn eine Zeitung 52 von unten auf die Klappe 70 gelegt wird, gibt die Klappe 70 nach und kann die Zeitung 52 in das Fach 50 hineinfallen. Sobald sie genügend tief gefallen ist, nimmt die Klappe 70 selbsttätig wieder die Position gemäß Figur 2 ein, das Haltemittel 66 erreicht wieder den Sperrzustand.

Die Haltemittel 66 benachbarter Fächer 50 sind alternierend angeordnet, wie insbesondere Figur 2 zeigt. Dies hat den Vorteil, dass genügend Bauraum für den Aktuator 68 und für die Bewegung des kurzen Schenkels 75 zur Verfügung steht.

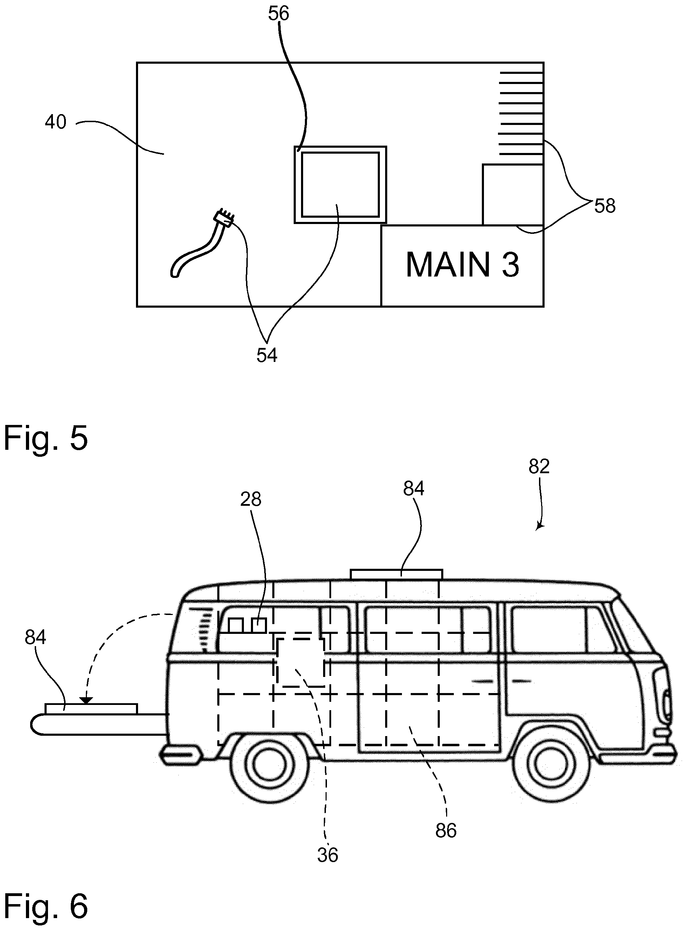

Figur 5 zeigt den Blick auf die Oberseite 40 der Kassette 36. Jede Kassette ist einem bestimmten Auslieferungsbereich zugeordnet, die Zuordnung kann jederzeit geändert werden. Die individuellen Daten für die Endkunden des bestimmten Auslieferungsbereichs sind im elektronischen Teil des Datenträgers 58 gespeichert, sie sind der Steuereinheit 30 zugänglich. Damit auch Menschen den bestimmten Auslieferungsbereich sofort erkennen können, ist der von Menschen lesbare Teil des Datenträgers 58 vorgesehen. Zudem kann noch ein Strichcode zum Datenträger 58 gehören. Durch Eingabe der entsprechenden Daten des Auslieferungsbereichs ist der Datenträger 58 individualisiert.

Es ist vorteilhaft, im Transportbehälter 60 einen transparenten Bereich, zum Beispiel ein Fenster, vorzusehen, durch den auch bei geschlossenem Deckel 62 des Transportbehälters 60 der von Menschen lesbare Teil des Datenträgers 58 sichtbar ist. Vorzugsweise ist dieser Teil des Datenträgers 58 auf einer Seitenfläche 42 oder einer Stirnfläche 44 angeordnet. Es ist vorteilhaft, die gefüllte Kassette 36 so zu orientieren, dass die Klappen 70 oben liegen und nicht von den Zeitungen 52 belastet werden, bis die Kassette 36 mit einer Drohne 20 verbunden wird. Hierzu muss die Kassette 36 in die Position geschwenkt werden, dass die Oberseite 40 oben ist. Es ist aber auch möglich, die Kassette in einer anderen Position zu transportieren. Je nachdem, für welche Transportposition man sich entscheidet, ist es vorteilhaft, den von Menschen lesbaren Teil des Datenträgers 58 so anzuordnen, dass die Information möglichst bequem lesbar ist, dies ist vorzugsweise bei Anbringen auf einer Stirnfläche 44 der Fall.

Figur 6 zeigt ein Fahrzeug 82, wie es für den Transport mehrerer gefüllter Kassetten 36 und mindestens einer Drohne 20 (nicht dargestellt) zu einem Startpunkt in einem Auslieferungsbereich vorgesehen ist. Das Fahrzeug 82 hat zwei unterschiedliche Start- und Landeplätze 84 es hat weiterhin eine Anzahl von Lagerplätzen 86 für Kassetten 36 und Akkumulatoren 28. Wenn sich das Fahrzeug 82 am Startplatz befindet, ordnet ein Mitarbeiter die einzelnen Kassetten 36 jeweils einer Drohne 20 zu. Er entnimmt hierzu einen Transportbehälter 60 aus dem Fahrzeug 82. Dabei achtet er auf den von Menschen lesbaren Teil des Datenträgers 58, der durch ein Fenster im Transportbehälter 60 sichtbar ist. Die Transportbehälter sind so im Fahrzeug 82 gelagert, dass die Fenster vorn sind. Dann löst er den Flug zu den einzelnen Endkunden aus. Zurückkehrenden Drohnen 20 nimmt der Mitarbeiter die nun leeren Kassetten 36, bestückt die Drohne 20 mit einer weiteren Kassette 36 und gegebenenfalls auch mit einem gefüllten Akkumulator 28. Der Mitarbeiter muss die Transportbehälter 60 der einzelnen Kassetten 36 nicht unbedingt in einer zwingenden Reihenfolge (z.B. MAIN 1, MAIN 2, MAIN 3) aus dem Fahrzeug 82 entnehmen und dann die zugehörige Kassette 36 mit der Drohne verbinden.

An der Drohne 20 ist eine Kamera 88 angeordnet, sie ist vorzugsweise mit ihrer Blickrichtung nach unten gerichtet und erfasst auch den Bereich unterhalb der Kassette 36. Sie kann damit einen Ablageplatz erfassen, an dem die Zeitung 52 bei einem Endkunden abgeworfen wird.

Die Klappe 70 kann beliebig ausgebildet sein, sie kann beispielsweise mindestens ein Drittel, vorzugsweise mindestens 60 %, insbesondere bis zu 80 % der Öffnung 48 abdecken.

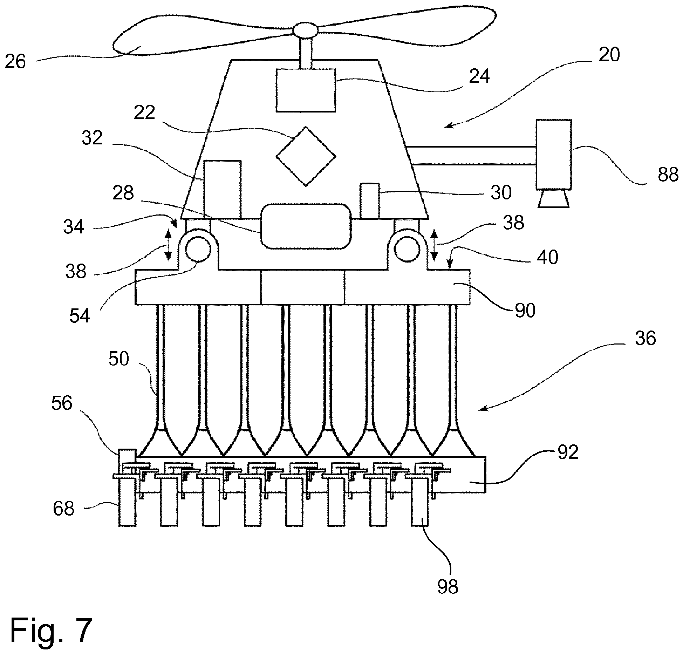

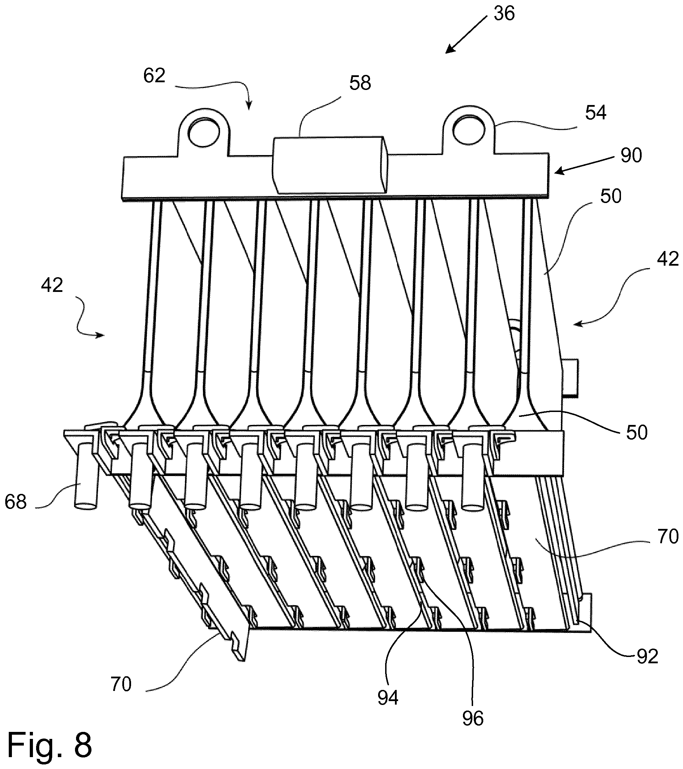

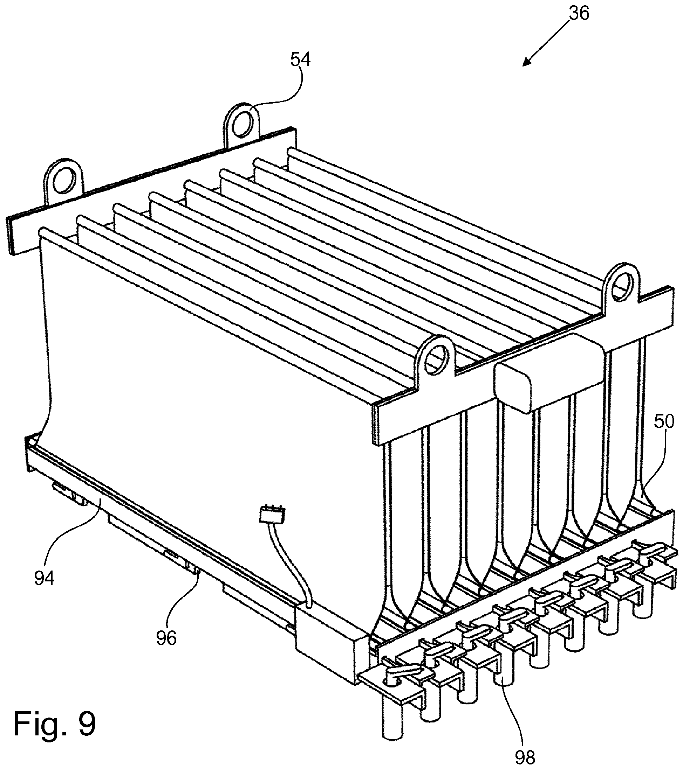

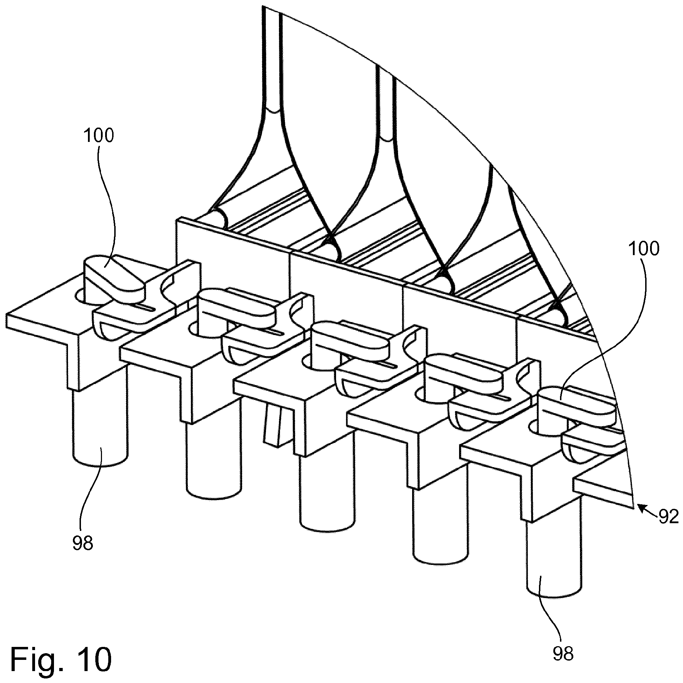

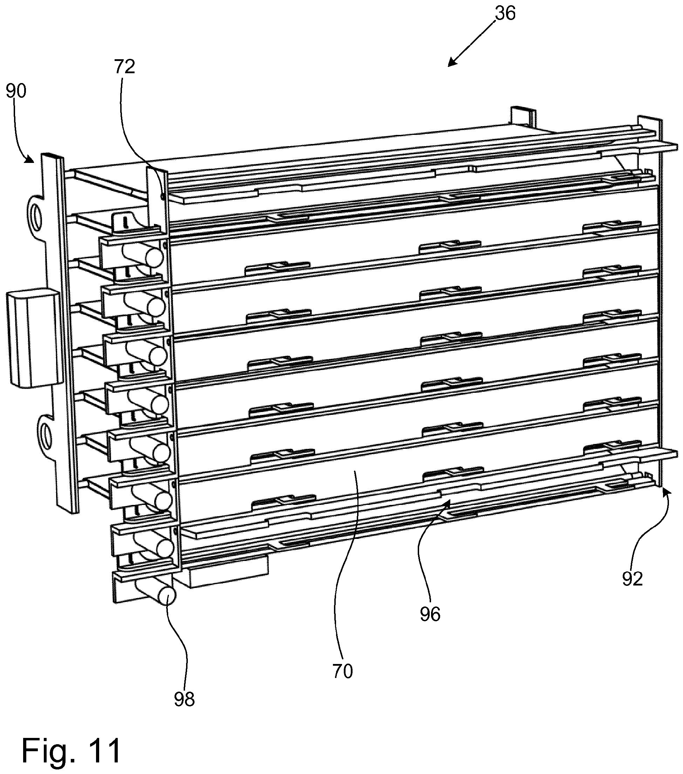

Im zweiten Ausführungsbeispiel nach den Figuren 7-11 ist die Kassette 36 im Gegensatz zum ersten Ausführungsbeispiel, wo sie ein starrer Kasten ist, nun zusammenlegbar ausgebildet. Dies wird dadurch erreicht, dass die Fächer 50 durch Stoffbahnen, insbesondere aus textilem Kunststoff, gebildet sind. Sie sind als Taschen ausgeführt, die sich zwischen einem stabilen Oberteil 90 und einem ebenfalls stabilen Unterteil 92 befinden und nur nach unten offen sind.

Das Oberteil 90 wird durch flache Seitenteile und diese verbindende Rundstäbe gebildet, wobei jedes textile Fach 50 einen Rundstab umschlingt. Die Anzahl der Rundstäbe entspricht der Anzahl der Fächer 50. Ähnlich ist auch das Unterteil 92 aufgebaut. Es hat unterhalb der flachen Seitenteile des Oberteils 90 seitliche Leisten, die erstens durch den Stäben entsprechende Stangen fest miteinander verbunden sind, wobei zwei Stangen zwischen sich die Mündung eines Faches 50 begrenzen, zweitens durch flache Profile 94 fest miteinander verbunden sind, an denen verschiebbare Hakenleisten 96 so angeordnet sind, dass sie in Längsrichtung der Profile 94 verschiebbar sind, und drittens Schwenkachsen 72 verbunden, die in den seitliche Leisten drehbar gelagert sind und jeweils mit einer Klappe 70 verbunden sind. Die Schwenkachsen 72 und die Klappen 70 sind Teil der Haltemittel 66. Die Zahl der Profile 94 und die Zahl der verschiebbaren Hakenleisten 96 entspricht der Anzahl der Fächer 50. Die Anzahl der Stangen entspricht der Anzahl der Fächer 50 plus 1. Aufgrund der flexiblen Taschen können Oberteil 90 und Unterteil 92 miteinander in Kontakt gebracht werden. Dadurch nimmt die leere Kassette weniger als 50 %, vorzugsweise weniger als 30 % Volumen ein als die gefüllte Kassette 36.

Jeder Hakenleiste 96 ist ein Aktuator 68 zugeordnet. Im Ausführungsbeispiel sind alle neun Aktuatoren der neun Fächer 50 an einer seitlichen Leiste angeordnet. Alternativ sind sie abwechselnd angeordnet, wie im ersten Ausführungsbeispiel. Als Aktuatoren werden kleine Elektromotoren 98 eingesetzt, deren Ausgangswelle jeweils mit einem Stellarm 100 verbunden ist. Werden die Elektromotoren 98 betätigt, ändert sich die Winkelstellung des jeweiligen Stellarms 100. An jedem Stellarm 100 ist jeweils eine Hakenleiste 96 angelenkt. Beim Verschwenken der Stellarme 100 werden die Hakenleisten 96 quer zu den seitlichen Leisten verschoben. Die Hakenleiste 96 kommen dadurch aus ihrer Normalstellung, in der sie mit ihren Haken unter die Klappen 70 greifen und damit den Sperrzustand sichern, in Ausnehmungen 102 der Klappen 70. Dort befinden die Haken sich nicht mehr unterhalb der Klappen 70, sodass letztere sich öffnen können, dies wird durch das Gewicht der darüber befindlichen Zeitung (nicht dargestellt) erreicht.

Die Kupplung 34 ist nun so ausgeführt, wie sie normalerweise bei kommerziellen Drohnen anzutreffen ist. Entsprechend ist das Kupplungsgegenstück 54 ausgebildet. Es hat vier Öffnungen, die sich an den freien Enden der flachen Seitenteile befinden. Sie fluchten mit entsprechenden Bohrungen in der Drohne 20. Der elektrische Teil der Kupplung 34 und des Kupplungsgegenstücks 54 ist nicht dargestellt.

### Bezugszeichenliste

- 20: Drohne
- 22: Flugkontrolleinheit
- 24: Elektromotor
- 26: Rotor
- 28: Akkumulator
- 30: Steuereinheit
- 32: Speicher
- 34: Kupplung
- 36: Kassette
- 38: Doppelpfeil
- 40: Oberseite
- 42: Seitenfläche
- 44: Stirnfläche
- 46: Ebene
- 48: Öffnungen
- 50: Fach
- 52: Zeitung
- 54: Kupplungsgegenstück
- 56: Sensor
- 58: Datenträger
- 60: Transportbehälter
- 62: Deckel
- 66: Haltemittel
- 68: Aktuator
- 69: Wand
- 70: Klappe
- 72: Schwenkachse
- 73: langer Schenkel
- 74: Kern
- 75: kurzer Schenkel
- 76: Feder
- 78: Pfeil
- 80: Anschlag
- 82: Fahrzeug
- 84: Start- und Landeplatz
- 86: Lagerplatz
- 88: Kamera
- 90: Oberteil
- 92: Unterteil
- 94: Profil
- 96: Hakenleiste
- 98: Elektromotor
- 100: Stellarm

## Patentansprüche

1. System für eine Zustellung von Zeitungen (52) an Endkunden
- mit mindestens einer Drohne (20), die a) eine für autonomes Fliegen eingerichtete Flugkontrolleinheit (22) aufweist, b) mindestens einen als Elektromotor (24) ausgebildeten Flugmotor hat, c) einen auswechselbaren Akkumulator (28) aufweist, der den Flugmotor mit Spannung versorgt, d) eine programmierbare Steuereinheit (30) hat, der mindestens ein Speicher (32) zugeordnet ist, und e) an ihrer Unterseite eine Kupplung (34) für eine elektrische und mechanische Verbindung aufweist und
- mit einer Mehrzahl von Kassetten (36), wobei jede Kassette (36) f) ein mit der Kupplung (34) zusammenwirkendes Kupplungsgegenstück (54) zur starren Verbindung einer Kassette (36) mit einer Drohne (20), g) eine Anzahl von nebeneinander angeordneten, nach unten offenen Fächern für die Aufnahme von jeweils einer folierten Zeitung (52), h) je Fach (50) ein mit der Steuereinheit (30) verbundenes Haltemittel (66) für die Zeitung (52), das normalerweise den Weg für die Zeitung (52) aus dem Fach (50) nach unten sperrt und von der Steuereinheit aus dem Sperrzustand in einen Freigabezustand bewegt wird, in welchem die Zeitung (52) nach unten aus dem Fach (50) herausfällt, und i) einen Datenträger (58) aufweist, der die Kassette (36) eindeutig identifiziert und der in Leseverbindung mit der programmierbaren Steuereinheit (30) ist.

2. System nach Anspruch 1, **dadurch gekennzeichnet, dass** es weiterhin ein Fahrzeug (82) aufweist, das mindestens einen Start- und Landeplatz (84) für eine Drohne (20) aufweist, an dem eine leere Kassette (36) von der Drohne (20) entnommen wird, eine gefüllte Kassette (36) mit der Drohne (20) verbunden wird, und vorzugsweise auch ein Austausch des Akkumulators (28) gegen einen geladenen stattfindet.

3. System nach einem der vorangegangenen Ansprüche, **dadurch gekennzeichnet, dass** im Datenträger (58) der Kassette (36) und/oder in dem Speicher (32) der Steuereinheit (30) für jedes einzelne Fach (50) der Kassette (36) die Koordinaten des zugehörigen Endkunden, für den die im Fach (50) befindliche Zeitung (52) bestimmt ist, gespeichert sind.

4. System nach Anspruch 3, **dadurch gekennzeichnet, dass** im Datenträger (58) der Kassette (36) und/oder im Speicher (32) für jeden Endkunden mindestens ein Ablageplatz der Zeitung (52), vorzugsweise mehrere Ablageplätze gespeichert sind, die vorzugsweise in Abfolge ihrer Priorität abgespeichert sind.

5. System nach einem der vorangegangenen Ansprüche, **dadurch gekennzeichnet, dass** die Drohne (20) eine mit der Steuereinheit (30) verbundene Kamera (88) aufweist, die nach unten gerichtet ist und vorzugsweise neben der Kassette (36) an der Drohne (20) angeordnet ist.

6. System nach einem der vorangegangenen Ansprüche, **dadurch gekennzeichnet, dass** sich die Öffnungen (48) zumindest einer Anzahl der Fächer einer Kassette (36), vorzugsweise die Öffnungen (48) aller Fächer, in einer Ebene (46) befinden.

7. System nach einem der vorangegangenen Ansprüche, **dadurch gekennzeichnet, dass** die Öffnungen (48) Schmalseiten haben, dass jedes Fach (50) mindestens ein Haltemittel (66) aufweist, und dass das Haltemittel (66) eines Fachs (50) einen mit dem Kupplungsgegenstück (54) elektrisch verbundenen Aktuator (68) aufweist, der vorzugsweise an einer Seitenfläche (42) der Kassette (36), in Nähe der Schmalseite der zugehörigen Öffnung angeordnet ist.

8. System nach Anspruch 7, **dadurch gekennzeichnet, dass** die Aktuatoren (68) benachbarter Fächer an gegenüberliegenden Seitenflächen (42) der Kassette (36) angeordnet sind.

9. System nach einem der Ansprüche 7 und 8, **dadurch gekennzeichnet, dass** die Öffnungen (48) Längsseiten haben, und dass das Haltemittel (66) eine Schwenkachse (72) aufweist, die entlang einer Längsseite drehbar angeordnet ist.

10. System nach einem der Ansprüche 7 bis 9, **dadurch gekennzeichnet, dass** die Schwenkachse (72) L-förmig ist, einen langen Schenkel (73), der parallel zur Ebene (46) verläuft und mit einer Klappe (70) verbunden ist, und einen kurzen Schenkel (75) aufweist, der quer zum langen Schenkel (73) verläuft und sich im Bewegungsbereich eines Kerns (74) des Aktuators (68) befindet.

11. System nach einem der vorangegangenen Ansprüche, **dadurch gekennzeichnet, dass** sich das Haltemittel (66) eines Fachs (50) im Freigabezustand außerhalb der Öffnung dieses Fachs und eines benachbarten Fachs befindet.

12. System nach einem der vorangegangenen Ansprüche, **dadurch gekennzeichnet, dass** die Kassette (36) mindestens einen Sensor (56) für das Erfassen, ob ein Fach (50) leer ist oder nicht, aufweist, insbesondere einen optischen Sensor (56) pro Fach (50) oder einen Gewichtssensor der Kassette (36).

13. System nach einem der vorangegangenen Ansprüche, weiterhin **gekennzeichnet durch** einen Transportbehälter (60), in den mindestens eine Kassette (36) hineinpasst und der vorzugsweise einen transparenten Bereich aufweist, unter dem sich der Datenträger (58) befindet.

14. Verfahren zur Zustellung von Zeitungen (52) an Endkunden unter Verwendung eines Systems nach einem der vorangegangenen Ansprüche, **dadurch gekennzeichnet, dass**
A) folierte Zeitungen (52) in einem Zentrum in Fächer einer Kassette (36) eingefüllt werden, wobei jeweils ein Fach (50) der Kassette (36) einem Endkunden zugeordnet ist, dessen Daten im Datenträger (58) und/oder in dem Speicher (32) der Steuereinheit (30) gespeichert sind,
B) die gefüllten Kassetten (36) zu Auslieferungsbereichen transportiert werden,
C) in einem Startpunkt jedes Auslieferungsbereichs ein Fahrzeug (82) positioniert wird, das mindestens eine Drohne (20) an Bord hat, die Drohne (20) mit einer gefüllten Kassette (36) beladen wird und auf einer vorberechneten Flugroute nacheinander mehrere einzelne Endkunden anfliegt,
D) am Ort des Endkunden das Haltemittel (66) desjenigen Fachs (50), in dem sich die Zeitung (52) des Endkunden befindet, geöffnet wird und die Zeitung (52) auf einen Ablageplatz des Endkunden fällt,
e) nachdem die Drohne (20) den letzten Endkunden beliefert hat, sie zum Startpunkt zurück fliegt und dort vorzugsweise mit einer vollen Kassette (36) bestückt wird und ihr Akkumulator (28) gegebenenfalls durch einen geladenen Akkumulator (28) ausgetauscht wird oder die Drohne im Fahrzeug (82) verbleibt.

15. Verfahren nach Anspruch 14, **dadurch gekennzeichnet, dass** nach dem Öffnen des Haltemittels (66) gemäß Schritt D) mittels eines Sensors (56) erfasst wird, ob das Fach (50) leer ist, und dass die Steuereinheit (30) vorzugsweise ein Alarmsignal ausgibt, wenn trotz des Befehls für ein Öffnen des Haltemittels (66) das Fach (50) nicht leer ist.

## Claims

1. System for the delivery of newspapers (52) to end customers
- with at least one drone (20) comprising a) a flight control unit (22) set up for autonomous flight, b) at least one aircraft engine (24) designed as an electric motor, c) an exchangeable rechargeable battery (28) that supplies the aircraft engine with voltage, d) a programmable control unit (30) assigned to at least one memory (32) and e) a coupling (34) on its underside for an electrical and mechanical connection; and
- with a plurality of holding boxes (36), wherein each holding box (36) comprises f) a coupling counterpart (54) interacting with the coupling (34) for rigidly connecting a holding box (36) to a drone (20), g) a number of downwardly open trays that are arranged next to each other for receiving one foiled newspaper respectively (52), h) per tray (50), one retaining means (66) connected to the control unit (30) for the newspaper (52), which normally blocks the way for the newspaper (52) downwardly out of the tray (50) and is moved by the control unit out of the blocking state into a release state, in which the newspaper (52) falls down from the tray (50) and i) a data carrier (58) that uniquely identifies the holding box (36) and which has a read connection to the programmable control unit (30).

2. System according to Claim 1, **characterized in that** it furthermore comprises a vehicle (82) which comprises at least one take-off and landing space (84) for a drone (20), at which an empty holding box (36) is taken from the drone (20), that a filled holding box (36) is connected to the drone (20), and that, preferably, an exchange of the rechargeable battery (28) for a charged one takes place.

3. System according to one of the preceding claims, **characterized in that**, in the data carrier (58) of the holding box (36) and/or in the memory (32) of the control unit (30) for each individual tray (50) of the holding box (36), the coordinates of the corresponding end customer, for whom the newspaper (52) in the tray (50) is intended, are stored.

4. System according to Claim 3, **characterized in that**, in the data carrier (58) of the holding box (36) and/or in the memory (32) for each end customer, at least one deposit location of the newspaper (52), preferably a plurality of deposit locations, is/are stored, which are preferably stored in a manner ranked according to their priority.

5. System according to one of the preceding claims, **characterized in that** the drone (20) comprises a camera (88) connected to the control unit (30), which is directed downwardly and is preferably arranged on the drone (20) next to the holding box (36).

6. System according to one of the preceding claims, **characterized in that** the openings (48) of at least a number of the trays of a holding box (36), preferably the openings (48) of all trays, are located on a single plane (46).

7. System according to one of the preceding claims, **characterized in that** the openings (48) have narrow sides, that each tray (50) comprises at least one retaining means (66), and that the retaining means (66) of a tray (50) comprises an electrically connected actuator (68) with the coupling counterpart (54), which is preferably arranged on a lateral surface (42) of the holding box (36), near the narrow side of the related opening.

8. System according to Claim 7, **characterized in that** the actuators (68) of adjacent trays are arranged on opposite lateral surfaces (42) of the holding box (36).

9. System according to any one of the Claims 7 and 8, **characterized in that** the openings (48) have longitudinal sides, and that the retaining means (66) comprises a pivot axis (72), which is rotatably arranged along a longitudinal side.

10. System according to any one of the Claims 7 to 9, **characterized in that** the pivot axis (72) is L-shaped and comprises a long limb (73), which runs parallel to the plane (46) and is connected to a flap (70), and comprises a short limb (75) which runs transversely to the long limb (73) and is located within the range of motion of a core (74) of the actuator (68).

11. System according to one of the preceding claims, **characterized in that** the retaining means (66) of a tray (50) is in the release state outside the opening of this tray and of an adjacent tray.

12. System according to one of the preceding claims, **characterized in that** the holding box (36) comprises at least one sensor (56) for detecting whether a tray (50) is empty or not, in particular, one optical sensor (56) for each tray (50) or a weight sensor of the holding box (36).

13. System according to one of the preceding claims, characterized furthermore by a transport container (60), into which at least one holding box (36) fits, and which preferably has a transparent region under which the data carrier (58) is located.

14. Method for delivering newspapers (52) to end customers using a system according to one of the previous claims, **characterized in that**
A) foiled newspapers (52) are filled at a centre in trays of a holding box (36), wherein one tray (50) of the holding box (36) is respectively assigned to an end customer whose data is stored in the data carrier (58) and/or in the memory (32) of the control unit (30),
B) the filled holding boxes (36) are transported to delivery areas;
C) a vehicle (82) is positioned at a starting point of each delivery area;
which has at least one drone (20) on board;
the drone (20) is loaded with a filled holding box (36) and flies to a plurality of individual end customers in succession on a pre-calculated flight route;
D) at the location of the end customer, the retaining means (66) of the tray (50) in which the newspaper (52) of the end customer is located is opened and the newspaper (52) falls onto a deposit location of the end customer;
E) after the drone (20) has supplied the last end customer, it flies back to the starting point and is preferably equipped there with a full holding box (36), and its rechargeable battery (28) is replaced with a charged rechargeable battery (28) if necessary or the drone remains in the vehicle (82) .

15. The method according to Claim 14, **characterized in that**, after opening the retaining agent (66) in accordance with step D), by means of a sensor (56), it is detected whether the tray (50) is empty, and that the control unit (30) preferably emits an alarm signal if, despite the command for opening the retaining means (66), the tray (50) is not empty.

## Revendications

1. Système pour une distribution de journaux (52) à des clients finaux
- avec au moins un drone (20), qui a) comporte une unité de contrôle de vol (22) agencée pour le vol autonome, b) possède au moins un moteur de vol constitué sous la forme d'un moteur électrique (24), c) comporte une batterie échangeable (28), qui alimente le moteur de vol en tension, d) possède une unité de commande programmable (30), à laquelle est attribuée au moins une mémoire (32) et e) comporte sur sa face inférieure un accouplement (34) pour une liaison électrique et mécanique et
- avec une pluralité de cassettes (36), sachant que chaque cassette (36), f) comporte une contre-pièce d'accouplement (54) coopérant avec l'accouplement (34) pour la liaison fixe d'une cassette (36) avec un drone (20), g) un nombre de compartiments disposés l'un à côté de l'autre, ouverts vers le bas pour la réception à chaque fois d'un journal pelliculé (52), h) pour chaque compartiment (50) un moyen de retenue (66) pour le journal (52), relié à l'unité de commande (30), qui bloque normalement le chemin au journal (52) vers le bas hors du compartiment (50) et est déplacé par l'unité de commande de l'état de blocage à un état de libération dans lequel le journal (52) tombe du compartiment (50) vers le bas et i) un support de données (58), qui identifie clairement la cassette (36) et qui est en liaison de lecture avec l'unité de commande programmable (30).

2. Système selon la revendication (1), **caractérisé en ce qu'**il comporte en plus un véhicule (82), qui comporte au moins une aire de décollage et d'atterrissage (84) pour un drone (20), sur laquelle une cassette (36) est enlevée du drone (20), une cassette remplie (36) est reliée au drone (20) et un échange de la batterie (28) pour une batterie chargée a de préférence également lieu.

3. Système selon l'une quelconque des revendications précédentes, **caractérisé en ce que** les coordonnées du client final correspondant, auquel le journal (52) se trouvant dans le compartiment (50) est destiné, sont mémorisées dans le support de données (58) de la cassette (36) et/ou dans la mémoire (32) de l'unité de commande (30) pour chaque compartiment (50) individuel de la cassette (36).

4. Système selon la revendication 3, **caractérisé en ce qu'**au moins un emplacement de réception du journal (52), de préférence plusieurs emplacements de réception, sont mémorisés dans le support de données (58) de la cassette (36) et/ou dans la mémoire (32) pour chaque client final, qui sont mémorisés de préférence dans l'ordre de leur priorité.

5. Système selon l'une quelconque des revendications précédentes, **caractérisé en ce que** le drone (20) comporte une caméra (88) reliée à l'unité de commande (30), qui est dirigée vers le bas et est disposée de préférence près de la cassette (36) sur le drone (20).

6. Système selon l'une quelconque des revendications précédentes, **caractérisé en ce que** les ouvertures (48) d'au moins un nombre de compartiments d'une cassette (36), de préférence les ouvertures (48) de tous les compartiments, se trouvent dans un plan (46).

7. Système selon l'une quelconque des revendications précédentes, **caractérisé en ce que** les ouvertures (48) possèdent des côtés étroits, **en ce que** chaque compartiment (50) comporte au moins un moyen de retenue (66) et **en ce que** le moyen de retenue (66) d'un compartiment (50) comporte un actionneur (68) relié électriquement à la contre-pièce d'accouplement (54), qui est disposée de préférence sur une surface latérale (42) de la cassette (36), à proximité du côté étroit de l'ouverture correspondante.

8. Système selon la revendication 7, **caractérisé en ce que** les actionneurs (68) des compartiments voisins sont disposés sur les surfaces latérales opposées (42) de la cassette (36).

9. Système selon l'une quelconque des revendications 7 et 8, **caractérisé en ce que** les ouvertures (48) possèdent des côtés longitudinaux et **en ce que** le moyen de retenue (66) comporte un axe de pivotement (72) qui est disposé pouvant tourner le long d'un côté longitudinal.

10. Système selon l'une quelconque des revendications 7 à 9, **caractérisé en ce que** l'axe de pivotement (72) est en forme de L, comporte une branche longue (73), qui passe parallèlement au plan (46) et est reliée à un volet (70) et une branche courte (75), qui passe transversalement à la branche longue (73) et se trouve dans la zone de mouvement d'un noyau (74) de l'actionneur (68).

11. Système selon l'une quelconque des revendications précédentes, **caractérisé en ce que** l'élément de retenue (66) d'un compartiment (50) se trouve à l'état de libération en dehors de l'ouverture de ce compartiment et d'un compartiment voisin.

12. Système selon l'une quelconque des revendications précédentes, **caractérisé en ce que** la cassette (36) comporte au moins un capteur (56) pour la saisie, indiquant si un compartiment (50) est vide ou non, en particulier un capteur optique (56) par compartiment (50) ou un capteur de poids de la cassette (36).

13. Système selon l'une quelconque des revendications précédentes, caractérisé en plus par un conteneur de transport (60), dans lequel vient s'adapter au moins une cassette (36) et qui comporte de préférence une zone transparente sous laquelle se trouve le support de données (58).

14. Procédé de distribution de journaux (52) à des clients finaux utilisant un système selon l'une quelconque des revendications précédentes,
**caractérisé en ce que**
A) des journaux pelliculés (52) sont introduits dans un centre dans des compartiments d'une cassette (36), sachant respectivement qu'un compartiment (50) de la cassette (36) est attribué à un client final dont les données sont mémorisées dans le support de données (58) et/ou dans la mémoire (32) de l'unité de commande (30),
B) les cassettes remplies (36) sont transportées vers les zones de livraison,
C) un véhicule (82) est positionné dans un point de décollage de chaque zone de livraison, qui embarque à bord au moins un drone (20), le drone (20) est chargé avec une cassette remplie (36) et se dirige vers plusieurs clients finaux individuels les uns derrière les autres selon un plan de vol préalablement calculé,
D) au lieu du client final, le moyen de retenue (66) du compartiment (50) dans lequel se trouve le journal (52) du client final, est ouvert et le journal (52) tombe sur un emplacement de réception du client final,
E) une fois que le drone (20) a livré le dernier client final, il revient vers l'aire de décollage et y est de préférence doté d'une cassette pleine (36) et sa batterie (28) est échangée le cas échéant pour une batterie chargée (28) ou le drone reste dans le véhicule (82).

15. Procédé selon la revendication 14, **caractérisé en ce qu'**après l'ouverture de l'élément de retenue (66), conformément à l'étape D), on saisit au moyen d'un capteur (56), si le compartiment (50) est vide et **en ce que** l'unité de commande (30) émet de préférence un signal d'alarme, si malgré l'ordre d'ouverture du moyen de retenue (66), le compartiment (50) n'est pas vide.
